Europäisches Patentamt

European Patent Office

Office européen des brevets

(19)

(11) Veröffentlichungsnummer: **0 467 893 B1**

(12) **EUROPÄISCHE PATENTSCHRIFT**

(45) Veröffentlichungstag der Patentschrift: **05.07.95**

(51) Int. Cl.6: **F02P 5/155**, F02B 37/12

(21) Anmeldenummer: **90904220.2**

(22) Anmeldetag: **10.03.90**

(86) Internationale Anmeldenummer:
**PCT/DE90/00178**

(87) Internationale Veröffentlichungsnummer:
**WO 90/12208 (18.10.90 90/24)**

(54) **ADAPTIVE KLOPFREGELUNG.**

(30) Priorität: **11.04.89 DE 3911748**

(43) Veröffentlichungstag der Anmeldung:
**29.01.92 Patentblatt 92/05**

(45) Bekanntmachung des Hinweises auf die
Patenterteilung:
**05.07.95 Patentblatt 95/27**

(84) Benannte Vertragsstaaten:
**DE FR GB IT SE**

(56) Entgegenhaltungen:
EP-A- 0 078 054     WO-A-88/08486
DE-A- 3 735 382     FR-A- 2 500 066
FR-A- 2 524 557     US-A- 4 646 522
US-A- 4 715 184     US-A- 4 856 481
US-A- 4 858 580

(73) Patentinhaber: **ROBERT BOSCH GMBH**
**Postfach 30 02 20**
**D-70442 Stuttgart (DE)**

(72) Erfinder: **ENTENMANN, Robert**
**Beihingerweg 15**
**D-7141 Benningen (DE)**
Erfinder: **STENGEL, Bernhard**
**Eckenerstrasse 6**
**D-7146 Tamm (DE)**
Erfinder: **UNLAND, Stefan**
**Richard-Wagner-Strasse 16**
**D-7141 Schwieberdingen (DE)**
Erfinder: **PHILIPP, Matthias**
**Guglingweg 10**
**D-7000 Stuttgart 40 (DE)**
Erfinder: **TORNO, Oskar**
**Schillerstrasse 10**
**D-7141 Schwieberdingen (DE)**
Erfinder: **ROTHHAAR, Ulrich**
**Melanchthonstrasse 31**
**D-7000 Stuttgart 50 (DE)**
Erfinder: **ROHDE, Siegfried**
**Seitenstrasse 10**
**D-7141 Oberriexingen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Stand der Technik

Die Erfindung betrifft ein Verfahren zur Klopfregelung einer Brennkraftmaschine mit einem Turbolader, bei dem beim Auftreten von Klopfen eines Zylinders bis zu einem Zündwinkelgrenzwert eine Zündwinkelspätverstellung zumindest dieses Zylinders und bei weiterem Klopfen eine Absenkung des Ladedrucks des Turboladers der Brennkraftmaschine erfolgt und bei fehlendem Klopfen der Brennkraftmaschine der Ladedruck erhöht und eine Rückstellung des Zündwinkels erfolgt. Ein solches Verfahren ist aus EP-A-0 078 054 bekannt.

Beim Betrieb einer Brennkraftmaschine stellt das sogenannte "Klopfen" einen kritischen Betriebszustand dar, der die Lebensdauer der Brennkraftmaschine äußerst ungünstig beeinflußt. Bekannt ist eine sogenannte Klopfregelung, die den Zündwinkel in Richtung "Spät" verschiebt, wenn ein Zylinder der Brennkraftmaschine klopft. Durch diese Zündwinkelverschiebung läßt sich das Klopfen beheben. Nach einer gewissen Zeit erfolgt eine Rückregelung zu dem ursprünglichen Zündwinkel, der beispielsweise in einem Kennfeld abgespeichert ist. Die Rückregelung wird bevorzugt schrittweise rückgängig gemacht, bis der Kennfeldwinkel erreicht ist. Sofern der Zylinder wieder klopft, wird der Vorgang wiederholt. Die Rückregelung wird nicht bis zum Kennfeldwinkel durchgeführt, sofern bereits vorher ein Klopfen auftritt. Es wird dann von dem aktuellen Zündwinkel aus wiederum eine Spätverstellung vorgenommen.

Es ist auch eine sogenannte adaptive Klopfregelung bekannt, bei der eine Speicherung des Zündwinkels erfolgt, bei dem der zugehörige Zylinder mit einer zulässigen Klopfintensität klopft. Dieser Zündwinkel wird bei späteren Steuerungsvorgängen anstelle eines in einem Kennfeld gespeicherten Zündwinkels verwendet.

Bei turbogeladenen Motoren ist eine Zündwinkel-Spätverstellung problematisch, weil dieses zu einer Erhöhung der Abgastemperatur und damit zu einer möglicherweise unzulässigen thermischen Belastung der Turbine des Turboladers führt.

Vorteile der Erfindung

Das erfindungsgemäße Verfahren zur Klopfregelung einer Brennkraftmaschine mit den im Hauptanspruch genannten Merkmalen hat demgegenüber den Vorteil, daß es bei Brennkraftmaschinen mit Turbolader verwendet werden kann. Erfindungsgemäß erfolgt beim Erreichen eines von der Brennkraftmaschinen-Abgastemperatur abhängigen Zündwinkel-Grenzwertes eine Absenkung des Ladedruckes des Turboladers. Solange der Zündwinkel-Grenzwert überschritten ist, wird vorzugsweise jeweils nach einer Wartezeit der Ladedruck um einen definierten Betrag abgesenkt. Der Ladedruck wird wieder erhöht, sobald aufgrund der Rückstellung bzw. Rückregelung des Zündwinkels der Zündwinkel-Grenzwert erneut angenommen wird, wobei in Abhängigkeit von dem jeweiligen Betriebszustand der Brennkraftmaschine, die sich einstellenden Ladedruckwerte für eine adaptive Prozeßführung abgespeichert und bei einem erneuten Anfahren gleicher Betriebszustände als Startwerte angenommen werden. Es liegt somit eine adaptive, das heißt, sich anpassende Klopfregelung im Hinblick auf den Ladedruck vor. Den durch die Zündwinkel-Spätverstellung zu erwartenden Abgastemperaturproblemen wird aufgrund der Senkung des Ladedruckes entgegengewirkt. Die zugehörigen Daten der jeweils angefahrenen Betriebszustände werden gespeichert, so daß bei einem nochmaligen Erreichen eines bestimmten Betriebszustandes die bereits gespeicherten, das heißt, "gelernten" Werte wiederverwendet werden können. Im Hinblick auf den Zündwinkel können auch die erforderlichen Spätverstellungen der Zylinder zur adaptiven Prozeßführung gespeichert werden, das heißt, die "gelernten" Zündwinkel-Spätverstellungen werden zum Beispiel bei einem Übergang von Leerlauf nach Vollast sehr schnell wirksam. Um dabei eine zu hohe Temperatur der Auslaßventile der Brennkraftmaschine und - wie schon erwähnt - des Turboladers zu vermeiden, wird der Ladedruck sofort um den adaptieren Betrag reduziert. Diese spontane Ladedrucksenkung läßt die angesprochenen Abgastemperaturprobleme gar nicht erst auftreten.

Nach einer Weiterbildung der Erfindung ist vorgesehen, daß die Zündwinkel-Spätverstellung und die Rückstellung bzw. Rückregelung des Zündwinkels stufenweise erfolgen.

Auch im Hinblick auf die Ladedruckabsenkung und die Ladedruckanhebung kann bevorzugt stufenweise vorgegangen werden.

Im klopffreien Betrieb der Brennkraftmaschine wird von einem betriebszustandsabhängigen Zündwinkel ausgegangen. Bevorzugt ist daher vorgesehen, daß der Zündwinkelverstellung ein betriebszustandsabhängiger Zündwinkel-Kennfeldwert zugrunde liegt. Dieser Kennfeldwert ist abhängig von der Last (z.B. Saugrohrdruck) und der Drehzahl der Brennkraftmaschine.

Das erfindungsgemäße Verfahren zeichnet sich dadurch aus, daß sich der aktuelle Zündwinkel aus der Summe des geltenden Zündwinkel-Kennfeldwertes und einem Spätverstellanteil-Zündwinkel zusammensetzt.

Sofern ein klopffreier Betrieb vorlieg, wird der Zündwinkel-Kennfeldwert angenommen. Wenn sich jedoch ein Klopfen einstellt, erfolgt eine Zündwinkel-Verstellung in Richtung "Spät", das heißt, der momentane Zündwinkel setzt sich aus dem betriebszustandsabhängigen Zündwinkel-Kennfeldwert und dem durch die Spätverstellung hinzukommenden Spätverstellanteil-Zündwinkel zusammen.

Wie bereits ausgeführt, erfolgt beim Überschreiten des Zündwinkel-Grenzwertes eine Absenkung des Ladedruckes. Sobald bei der Rückstellung des Zündwinkels der Zündwinkel-Grenzwert erneut angenommen wird, findet eine Ladedruckerhöhung statt. Der genannte Zündwinkel-Grenzwert setzt sich additiv aus zwei Komponenten zusammen, nämlich aus dem bereits genannten Zündwinkel-Kennfeldwert, der von der Last und der Drehzahl der Brennkraftmaschine abhängig ist, und einem Zuwachs-Zündwinkel, der von dem Ist-Wert des Ladedruckes und der Drehzahl der Brennkraftmaschine abhängig ist. Demzufolge läßt sich die Bedingung zur Ladedruckabsenkung auch unabhängig vom Zündwinkel-Kennfeldwert definieren, indem eine Ladedruckabsenkung immer dann erfolgt, wenn der Spätverstellanteil-Zündwinkel größer als bzw. gleich dem Zuwachs-Zündwinkel ist. Für die Ladedruckanhebung ergibt sich somit die Bedingung: Der Spätverstellanteil-Zündwinkel ist kleiner als der Zuwachs-Zündwinkel.

Die Ladedruckabsenkung wird vorzugsweise dadurch vorgenommen, daß die Differenz von einem dem momentanen Betriebszustand entsprechenden Ladedrucksollwert und einem den Umgebungsdruck entsprechenden betriebszustandsunabhängigen Normal-Ladedruck-Sollwert gebildet und mit einem Adaptionsfaktor multipliziert wird. Der Adaptionsfaktor kann Werte zwischen 0 und 1 annehmen. Bei einem Adaptionsfaktor von 1 steht somit der volle Ladedrucksollwert zur Verfügung, der - je nach Größe des Adaptionsfaktors - bis auf 0 reduziert werden kann.

Nach einer Weiterbildung der Erfindung ist vorgesehen, daß die jeweils aktuellen Adaptionsfaktoren in Abhängigkeit vom Betriebszustand (Ansaugtemperatur und Drehzahl) der Brennkraftmaschine in einem Adaptions-Kennfeld gespeichert werden. Diese Vorgehensweise soll beispielhaft näher erläutert werden: Für eine bestimmte Ansaugtemperatur und Drehzahl stellt sich - nach einem noch zu erläuternden Prinzip - ein zugehöriger Adaptionsfaktor ein. Dieser wird an entsprechend zugeordneter Stelle im Adaptions-Kennfeld gespeichert. Wird nun dieser Betriebszustand, zum Beispiel durch Erhöhung der Drehzahl, verlassen, zu einem späteren Zeitpunkt jedoch wieder angefahren, so wird für die Prozeßführung der abgespeicherte Adaptionsfaktor wieder ausgelesen und als Ausgangsgröße (Startwert) verwendet. Sofern sich im weiteren Verlauf für diesen erneut angefahrenen Betriebszustand aufgrund des adaptiven Verfahrens über entsprechende Lernschritte ein neuer Adaptionsfaktor ergibt, so wird dieser an die Stelle des bisher verwendeten Adaptionsfaktors gesetzt, das heißt, der entsprechende Speicherplatz in dem Adaptions-Kennfeld wird überschrieben.

Um auch die im Adaptions-Kennfeld gespeicherte Anzahl der Adaptionsfaktoren sinnvoll zu begrenze, ist jedem Adaptionsfaktor ein Ansaugtemperaturbereich und ein Drehzahlbereich zugeordnet.

Das Adaptionskennfeld wird bevorzugt in einem Schreib-Lese-Speicher (RAM) gespeichert.

Das erfindungsgemäße Verfahren wird vorzugsweise nur nach Erreichen der Nennwerte der Brennkraftmaschine angewendet. Beispielsweise ist in der Kaltlaufphase die adaptive Klopfregelung nicht erwünscht. Demzufolge wird eine Speicherung der Adaptionsfaktoren nur dann vorgenommen, wenn die Temperatur der Brennkraftmaschine größer als eine Freigabetemperatur ist. Vor Erreichen dieser Freigabetemperatur (Kaltlaufphase) erfolgt zwar ebenfalls eine Klopfregelung, diese arbeitet jedoch nicht adaptiv.

Bei einem Neustart der Brennkraftmaschine und einer Temperatur unterhalb der Freigabetemperatur wird nur ein Adaptionsfaktor für alle Betriebszustände aktiv und auf den Wert 1 gesetzt. Dieser Wert kann sich zwar während der Kaltlaufphase verkleinern, so daß eine entsprechende Ladedruckabsenkung erfolgt; bei einem folgenden Neustart der Brennkraftmaschine wird jedoch dann wieder von dem Wert 1 ausgegangen. Dieses unterscheidet sich grundsätzlich von der Prozeßführung bei Temperaturen oberhalb der Freigabetemperatur, da in diesem Falle von dem für den vorliegenden Betriebszustand zuständigen, abgespeicherten Adaptionsfaktor ausgegangen wird.

Der Ladedruck-Sollwert ist ebenfalls betriebszustandsabhängig. Er ändert sich mit der Drehzahl und den Drosselklappenöffnungswinkel der Brennkratfmaschine.

Vorzugsweise wird eine Ladedruckerhöhung, das heißt eine Vergrößerung des Adaptionsfaktors nur dann vorgenommen, wenn der Drosselklappenöffnungswinkel einen Mindestwert überschritten hat. Dieser Mindestwert ist von der Drehzahl der Brennkraftmaschine abhängig.

Zeichnung

Die Erfindung wird in folgenden anhand der Figuren näher erläutert. Es zeigen:
Figur 1 ein Diagramm einer Zündwinkelverstellung beim Klopfen eines Zylinders einer Brennkraftmaschine,
Figur 2 ein Diagramm, daß den zur Figur 1 zugehörigen Ladedruckverlauf des Turboladers der Brennkraftmaschine angibt,
Figur 3 ein die Ladedruckabsenkung verdeutlichendes Diagramm und

Figur 4 eine schematische Darstellung eines Adaptions-Kennfeldes.

Beschreibung des Ausführungsbeispiels

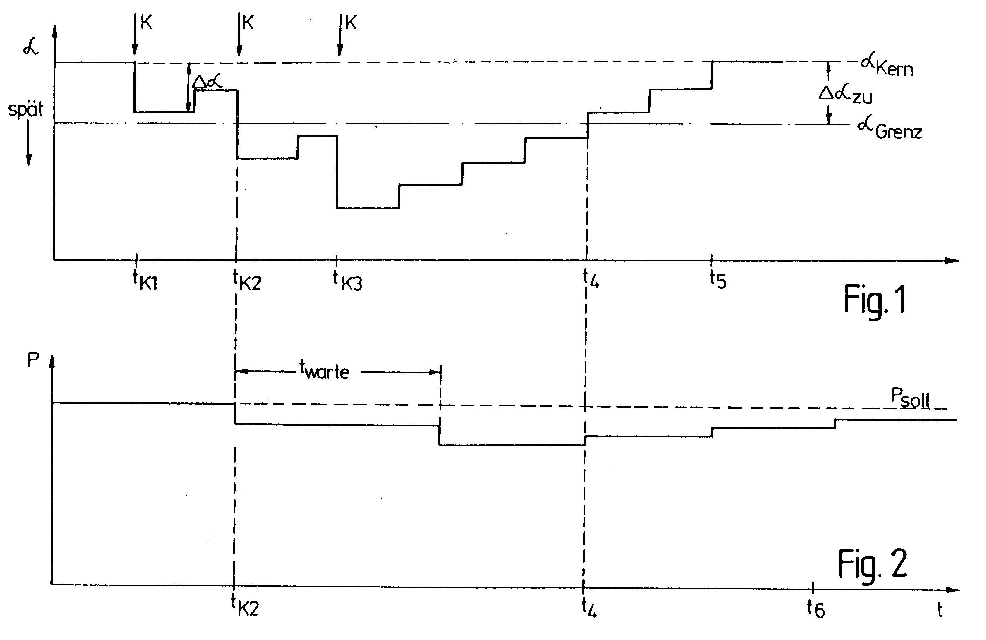

Bei der Erläuterung des erfindungsgemäßen Verfahrens zur Klopfregelung einer Brennkraftmaschine sei davon ausgegangen, daß der Motor seine Betriebstemperatur angenommen hat und mit einem Zündwinkel $\alpha$ betrieben wird, der aus einem Kennfeld stammt. Dieser Zündwinkel-Kennfeldwert $\alpha_{Kenn}$ ist von der Last bzw. dem Saugrohrdruck und der Drehzahl n der Brennkraftmaschine abhängig. Er ist in der Figur 1 als gestrichelte Linie dargestellt. Tritt im Zeitpunkt $t_{K1}$ ein Klopfen eines Zylinders der Brennkraftmaschine auf (dieser Zustand ist in der Figur 1 mit einem mit "K" bezeichneten Pfeil gekennzeichnet), so erfolgt stufenweise eine Zündwinkelverstellung in Richtung "Spät". Diese Zündwinkel-Spätverstellung wird stufenweise vorgenommen (beispielsweise je Stufe 3° Zündwinkel-Spätverstellung). Liegt zum Zeitpunkt $t_{K2}$ immer noch ein Klopfen vor, so erfolgt die Spätverstellung des Zündwinkels $\alpha$ um eine weitere 3°-Stufe usw (Zeitpunkt $t_{K3}$). Der aktuelle Zündwinkel $\alpha$ vergrößert sich - je nach Anzahl der Stufenverstellungen - demgemäß ausgehend von dem Zündwinkel-Kennfeldwert $\alpha_{Kenn}$ um einen Spätverstellanteil-Zündwinkel $\Delta\alpha$.

Ferner ist in der Figur 1 ein Zündwinkel-Grenzwert $\alpha_{Grenz}$ als strichpunktierte Linie dargestellt. Der Zündwinkel-Grenzwert $\alpha_{Grenz}$ setzt sich aus dem bereits beschriebenen Zündwinkel-Kennfeldwert $\alpha_{Kenn}$ und einem Zusatz-Zündwinkel $\Delta\alpha_{Zu}$ zusammen. Der Zuwachs-Zündwinkel $\Delta\alpha_{Zu}$ ist von dem Ist-Wert des Ladedrucks und der Drehzahl n der Brennkraftmaschine abhängig.

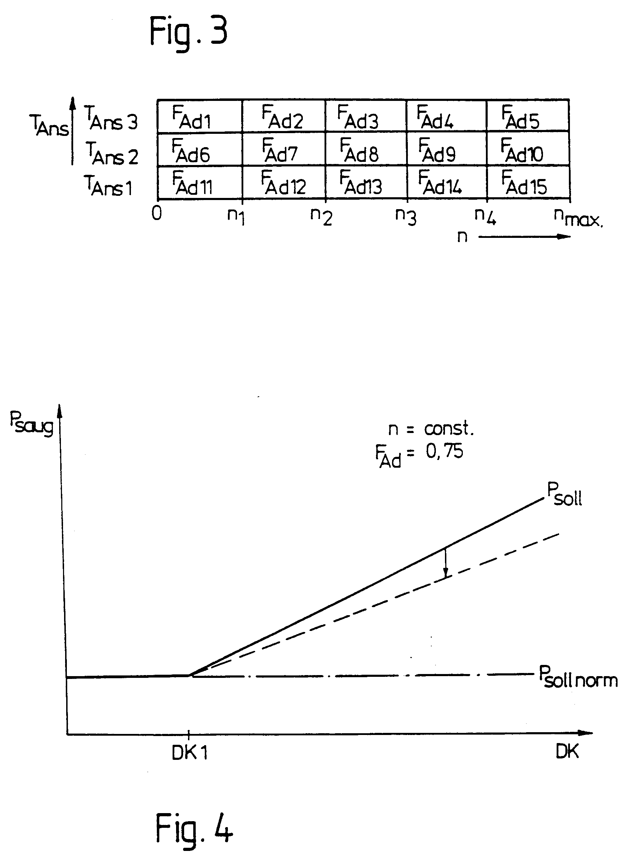

Sobald der aktuelle Zündwinkel $\alpha$ den Zündwinkel-Grenzwert $\alpha_{Grenz}$ aufgrund der vorgenommenen Zündwinkel-Spätverstellung annimmt (siehe Zeitpunkt $t_{K2}$ der Figur 1) wird - ausgehend von dem Ladedruck-Sollwert $P_{Soll}$ - eine Verringerung des Ladedruckes P sooft stufenweise vorgenommen, bis obige Bedingung nicht mehr erfüllt ist (Zeitpunkt $t_4$ in Figur 1 und 2). Die Zeit zwischen zwei Ladedruckabsenkungen beträgt $t_{Warte}$. Diese Ladedruckabsenkung erfolgt gemäß Figur 2 ebenfalls stufenweise, z.B. 0,1 bar je Stufe. Die Ladedruckabsenkung verhindert, daß sich die Abgastemperatur der turbogeladenen Brennkraftmaschine aufgrund der durch Klopfen ausgelösten Zündwinkel-Spätverstellung erhöht, da diese Erhöhung zu Temperaturproblemen des Turboladers führen könnte. Der bereits genannte Ladedruck-Sollwert $P_{Soll}$ ist betriebszustandsabhängig, und zwar besteht eine Abhängigkeit von der Drehzahl n und dem Drosselklappenöffnungswinkel DK der Brennkraftmaschine.

Die Figur 1 verdeutlicht, daß nach dem Zeitpunkt $t_{K3}$ das Klopfen des Zylinders aufgehört hat. Eine weitere Verstellung des Zündwinkels $\alpha$ in Richtung "Spät" unterbleibt demgemäß; es wird vielmehr die Rückregelung des Zündwinkels $\alpha$ vorgenommen. Diese Rückregelung bzw. Rückstellung erfolgt ebenfalls stufenweise, z.B. 3° innerhalb von 10 Sekunden in 0,3°-Schritten. Dieses führt dazu, daß zum Zeitpunkt $t_4$ der aktuelle Zündwinkel $\alpha$ wieder den Zündwinkel-Grenzwert $\alpha_{Grenz}$ annimmt. Dieses hat zur Folge, daß eine Ladedruckanhebung vorgenommen wird. Das Anheben des Ladedruckes erfolgt beispielsweise alle 20 Sekunden um 0,1 bar. Zum Zeitpunkt $t_5$ erreicht der aktuelle Zündwinkel $\alpha$ aufgrund der Rückstellung wieder den Zündwinkel-Kennfeldwert $\alpha_{Kenn}$ und zum Zeitpunkt $t_6$ ist der Ladedruck P des Turboladers auf den Ladedruck-Sollwert $P_{Soll}$ zurückgeführt. Sofern nachfolgend ein erneutes Klopfen eines Zylinders auftritt, wiederholt sich der beschriebene Vorgang in entsprechender Weise.

Die bei der zuvor anhand der Figuren 1 und 2 erläuterte Ladedruckabsenkung wird mittels eines Adaptionsfaktors $F_{Ad}$ erfaßt. Dieser Adaptionsfaktor $F_{Ad}$ kann den Wert zwischen 0 und 1 annehmen. Die Verringerung des Ladedruckes ist proportional zu dem Adaptionsfaktor $F_{Ad}$. Er wird - in Abhängigkeit von dem Betriebszustand der Brennkraftmaschine - in einem Adaptions-Kennfeld gespeichert. Erfinderungsgemäß wird so vorgegangen, daß jeweils der aktuelle Adaptionsfaktor $F_{Ad}$ des jeweils zugehörigen Betriebszustandes in dem Adaptions-Kennfeld niedergelegt wird, wobei ein für den gleichen Betriebszustand bereits vorliegender, älterer Adaptionsfaktor $F_{Ad}$ überschrieben wird. Da die Ladedruckabsenkung stufenweise erfolgt, verändert auch der Adaptionsfaktor $F_{Ad}$ nur stufenweise seinen Wert, beispielsweise um Stufen von 0,1. Das Ablegen der den jeweiligen Betriebszuständen zugeordneten Adaptionsfaktoren $F_{Ad}$ erfolgt - gemäß Figur 3 - in Abhängigkeit von der Ansaugtemperatur $T_{Ansaug}$ und der Drehzahl n der Brennkraftmaschine. Beispielsweise gilt für den Drehzahlbereich $n_1$ bis $n_2$ und den Temperaturbereich $T_{Ansaug1}$ bis $T_{Ansaug2}$ der adaptionsfaktor $F_{Ad7}$. Dieser Adaptionsfaktor $F_{AD7}$ ist der für den genannten Betriebszustand momentan gültige; er hat beispielsweise einen Wert von 0,5. Dieser Wert wurde als aktueller Wert bei dem an den Figuren 1 und 2 erläuterten Verfahren angenommen. Wird der Betriebszustand, z.B. durch einen Beschleunigungsvorgang, verlassen, anschließend jedoch wieder angenommen, so wird der eingespeicherte Adaptionsfaktor $F_{AD7}$ von 0,5 als "Startwert" für die Ladedruckabsenkung sofort wieder herangezogen, das heißt, es wird auf den alten, "gelernten" Wert wird zurückgegriffen. Sofern sich bei dem beschriebenen erneuten Anlauf des vorliegenden Betriebszustandes im Zuge des weiteren Betriebes ergibt, daß der Wert 0,5 nicht hinreicht, sondern eine weitere Stufe der Ladedruckabsenkung vorgenommen werden muß, so wird er mit dem Wert 0,4 überschrieben; das heißt, der Adaptionsfaktor $F_{AD7}$ wird mit den Wert 0,4 abgespeichert. Hieraus ist ersichtlich, daß bei einem Wiederanfahren eines bereits innegehabten Betriebszustandes sofort auf den jeweils gespeicherten Adaptionsfaktor $F_{AD7}$ zurückgegriffen werden kann, so daß augenblicklich eine Ladedruckabsenkung erfolgt, die das Auftreten von Temperaturproblemen des Turboladers verhindert. Ferner erfolgt stets eine Aktualisierung des entsprechenden Adaptionsfaktors. Der Zusammenhang zwischen dem Adaptionsfaktor $F_{AD}$ und dem Ladedruck P ergibt sich über eine mathematische Beziehung. Demgemäß wird die Ladedruckabsenkung dadurch vorgenommen, daß die Differenz von dem den momentanen Betriebszustand entsprechenden Ladedruck-Sollwert $P_{Soll}$ und einem den Umgebungsdruck entsprechenden, betriebszustandunabhängigen Normal-Ladedruck-Sollwert $P_{Sollnorm}$ gebildet und mit dem jeweils entsprechenden Adaptionsfaktor $F_{AD}$ multipliziert wird.

Die beschriebene adaptive Klopfregelung soll nur in der Warmlaufphase der Brennkraftmaschine erfolgen. Während der Kaltlaufphase ist ein nicht adaptiver Prozeß vorgesehen. Dengemäß erfolgt eine Speicherung der Adaptionsfaktoren $F_{AD}$ nur dann, wenn die Temperatur $T_{Mot}$ der Brennkraftmaschine größer als eine Freigabetemperatur $T_{Frei}$ ist. Sobald die Temperatur $T_{Mot}$ der Brennkraftmaschine oberhalb der Freigabetemperatur $T_{Frei}$ liegt, erfolgt eine adaptive Klopfregelung, das heißt, es wird - in Abhängigkeit vom Betriebszustand - auf die gespeicherten aktuellen Adaptionsfaktoren $F_{AD}$ zurückgegriffen.

Vorzugsweise kann vorgesehen sein, daß eine Vergrößerung der Adaptionsfaktoren $F_{AD}$ nur dann erfolgt, wenn der Drosselklappenöffnungswinkel DK einen Mindestwert $DK_{min}$ überschritten hat. Dieser Mindestwert $DK_{min}$ ist von der Drehzahl n der Brennkraftmaschine abhängig.

Schließlich sei noch das Diagramm der Figur 4 erläutert, auf dessen Abszisse der Saugrohrdruck und auf dessen Ordinate der Drosselklappenöffnungswinkel DK aufgetragen sind. Die Werte dieses Diagrammes gelten für eine ganz bestimmte Drehzahl n und einen Adaptionsfaktor $F_{AD}$ von 0,75. Als strichpunktierte Linie ist dort der Normal-Ladedruck-Sollwert $P_{Sollnorm}$ dargestellt. Es ist ersichtlich, daß der in durchgezogene Linie dargestellte Ladedruck-Sollwert $P_{Soll}$ ab einem bestimmten Drosselklappenöffnungswinkel DK1 ansteigt. Der in dem Diagramm der Figur 4 dargestellte Pfeil deutet an, wie ein bestimmter Punkt der Kennlinie $P_{Soll}$ durch die Multiplikation mit dem Adaptionsfaktor $F_{AD}$ zu einem neuen Punkt führt, der auf einer gestrichelt gezeichneten Kennlinie liegt. Diese Kennlinie wird durch die Beziehung

$$P_{Soll} - (P_{Soll} - P_{Sollnorm}) \cdot (1 - F_{AD})$$

beschrieben.

**Patentansprüche**

1. Verfahren zur Klopfregelung einer Brennkraftmaschine mit einem Turbolader, bei dem beim Auftreten von Klopfen eines Zylinders bis zu einem Zündwinkelgrenzwert eine Zündwinkelspätverstellung zumindest dieses Zylinders und bei weiterem Klopfen eine Absenkung des Ladedrucks des Turboladers der Brennkraftmaschine erfolgt und bei fehlendem Klopfen der Brennkraftmaschine der Ladedruck erhöht und eine Rückstellung des Zündwinkels erfolgt, dadurch gekennzeichnet, daß der Zündwinkelgrenzwert von der Brennkraftmaschinen-Abgastemperatur ($T_{ab}$) abhängig festgelegt ist und daß die Erhöhung des Ladedrucks (P) erfolgt, sobald aufgrund der Rückstellung des Zündwinkels ($\alpha$) der Zündwinkelgrenzwert ($\alpha_{Grenz}$) erneut angenommen wird, wobei in Abhängigkeit von dem jeweiligen Betriebszustand der Brennkraftmaschine die sich einstellenden Ladedruckwerte für eine adaptive Prozeßführung gespeichert und bei einem erneuten Anfahren gleicher Betriebszustände als Startwerte angenommen werden.

2. Verfahren nach Anspruch 1, **dadurch gekennzeichnet,** daß in Abhängigkeit vom jeweiligen Betriebszustand der sich einstellende Zündwinkel ($\alpha$) für eine adaptive Prozeßführung insbesondere für jeden Zylinder gespeichert wird.

3. Verfahren nach einem der vorhergehenden Ansprüche, **dadurch gekennzeichnet,** daß die Zündwinkel-Spätverstellung und die Rückstellung des Zündwinkels ($\alpha$) stufenweise erfolgen.

4. Verfahren nach einem der vorhergehenden Ansprüche, **dadurch gekennzeichnet,** daß die Ladedruckabsenkung und die Ladedruckanhebung stufenweise vorgenommen werden.

5. Verfahren nach einem der vorhergehenden Ansprüche, **dadurch gekennzeichnet,** daß der Zündwinkelverstellung ein beriebszustandsabhängiger Zündwinkel-Kennfeldwert ($\alpha_{Kenn}$) zugrundeliegt.

6. Verfahren nach einem der vorhergehenden Ansprüche, **dadurch gekennzeichnet,** daß sich der aktuelle Zündwinkel ($\alpha$) aus der Summe

des geltenden Zündwinkel-Kennfeldwertes ($\alpha_{Kenn}$) und einem Spätverstellanteil-Zündwinkel ($\Delta\ \alpha$) zusammensetzt.

7. Verfahren nach einem der vorhergehenden Ansprüche, **dadurch gekennzeichnet,** daß sich der Zündwinkel-Grenzwert ($\alpha_{Grenz}$) aus dem Zündwinkel-Kennfeldwert ($\alpha_{Kenn}$) und einem von dem Ist-Wert des Ladedrucks ($P_{ist}$) und der Drehzahl (n) der Brennkraftmaschine abhängigen Zuwachs-Zündwinkel ($\Delta\alpha_{zu}$) zusammensetzt.

8. Verfahren nach einem der vorhergehenden Ansprüche, **dadurch gekennzeichnet,** daß eine Ladedruckabsenkung erfolgt, wenn der Spätverstellanteil-Zündwinkel ($\Delta\alpha$) größer als bzw. gleich groß wie der Zuwachs-Zündwinkel ($\Delta\alpha_{zu}$) ist.

9. Verfahren nach einem der vorhergehenden Ansprüche, **dadurch gekennzeichnet,** daß die Ladedruckabsenkung dadurch vorgenommen wird, daß die Differenz von einem dem momentanen Betriebszustand entsprechenden Ladedrucksollwert ($P_{Soll}$) und einem dem Umgebungsdruck entsprechenden, betriebszustandsunabhängigen Normal-Ladedrucksollwert ($P_{Sollnorm}$) gebildet und mit einem Adaptionsfaktor ($F_{Ad}$) multipliziert wird.

10. Verfahren nach einem der vorhergehenden Ansprüche, **dadurch gekennzeichnet,** daß die jeweils aktuellen Adaptionsfaktoren ($F_{Ad}$) in Abhängigkeit von Ansaugtemperatur ($T_{Ans}$) und Drehzahl (n) der Brennkraftmaschine in einem Adaptions-Kennfeld gespeichert werden.

11. Verfahren nach einem der vorhergehenden Ansprüche, **dadurch gekennzeichnet,** daß jedem Adaptionsfaktor ($F_{Ad}$) ein Ansaugtemperaturbereich und ein Drehzahlbereich zugeordnet ist.

12. Verfahren nach einem der vorhergehenden Ansprüche, **dadurch gekennzeichnet,** daß das Adaptions-Kennfeld in einem Schreib-Lese-Speicher (RAM) gespeichert ist.

13. Verfahren nach einem der vorhergehenden Ansprüche, **dadurch gekennzeichnet,** daß eine Speicherung der Adaptionsfaktoren ($F_{Ad}$) nur dann erfolgt, wenn die Temperatur ($T_{Mot}$) der Brennkraftmaschine größer als eine Freigabetemperatur ($T_{Frei}$) ist.

14. Verfahren nach einem der vorhergehenden Ansprüche, **dadurch gekennzeichnet,** daß bei einem Neustart der Brennkraftmaschine und einer Temperatur ($T_{Mot}$) unterhalb der Freigabetempertur ($T_{Frei}$) nur ein Adaptionsfaktor ($F_{Ad}$ *) für alle Betriebszustände aktiv ist, der nach einem Neustart auf den neutralen Startwert "1" gesetzt wird.

15. Verfahren nach einem der vorhergehenden Ansprüche, **dadurch gekennzeichnet,** daß der Ladedruck-Sollwert ($P_{Soll}$) von der Drehzahl (n) und dem Drosselklappenöffnungswinkel (DK) der Brennkraftmaschine abhängig ist.

16. Verfahren nach einem der vorhergehenden Ansprüche, **dadurch gekennzeichnet,** daß bei einem Neustart der Brennkraftmaschine und einer Temperatur ($T_{Mot}$) oberhalb der Freigabetemperatur ($T_{Frei}$) von den gespeicherten Adaptionsfaktoren ($F_{Ad}$) ausgegangen wird.

17. Verfahren nach einem der vorhergehenden Ansprüche, **dadurch gekennzeichnet,** daß eine Vergrößerung des Adaptionsfaktors ($F_{Ad}$ *) bzw. der Adaptionsfaktoren ($F_{Ad}$) nur dann erfolgt, wenn der Drosselklappenöffnungswinkel (DK) einen Mindestwert ($DK_{min}$) überschritten hat.

18. Verfahren nach einem der vorhergehenden Ansprüche, **dadurch gekennzeichnet,** daß der Mindestwert ($DK_{min}$) von der Drehzahl (n) der Brennkraftmaschine abhängig ist.

19. Verfahren nach einem der vorhergehenden Ansprüche, **dadurch gekennzeichnet,** daß sich der Grenzwert ($\alpha_{Grenz}$) aus der Summe der einzelnen Winkel der Spätverstellung aller Zylinder zusammensetzt.

**Claims**

1. Method for the closed-loop knock control of an internal combustion engine with a turbocharger, in which, in the event of the occurrence of knocking of a cylinder, an ignition-angle retardation of at least this cylinder up to an ignition-angle limiting value and, in the event of further knocking, a reduction of the boost pressure of the turbocharger of the internal combustion engine is effected and, in the absence of knocking of the internal combustion engine, the boost pressure is increased and the ignition angle reset, characterised in that the ignition-angle limiting value is determined as a function of the exhaust-gas temperature ($T_{Ab}$) of the internal combustion engine and in that the increase in the boost pressure (P) is effected as soon as the ignition-angle limiting value

($\alpha_{limit}$) is reassumed owing to the resetting of the ignition angle ($\alpha$), the boost-pressure values established being stored as a function of the respective operating condition of the internal combustion engine for the purpose of adaptive process control and assumed as starting values when the same operating conditions are driven into again.

2. Method according to Claim 1, characterized in that the ignition angle ($\alpha$) established is stored, in particular for each cylinder, as a function of the respective operating condition for adaptive process control.

3. Method according to one of the preceding claims, characterized in that the ignition angle retardation and the resetting of the ignition angle ($\alpha$) are effected stepwise.

4. Method according to one of the preceding claims, characterized in that the boost pressure reduction and the boost pressure increase are performed stepwise.

5. Method according to one of the preceding claims, characterized in that the ignition angle adjustment is based on an operating-condition-dependent ignition angle value from a map ($\alpha_{map}$).

6. Method according to one of the preceding claims, characterized in that the current ignition angle ($\alpha$) is made up of the sum of the applicable ignition angle value from the map ($\alpha_{map}$) and an ignition-angle retardation component ($\Delta\alpha$).

7. Method according to one of the preceding claims, characterized in that the ignition-angle limiting value ($\alpha_{limit}$) is made up of the ignition angle value from the map ($\alpha_{map}$) and, which is dependent on the actual value of the boost pressure (Pactual) and the speed (n) of the internal combustion engine an of increment ignition angle ($\Delta\alpha_{inc}$).

8. Method according to one of the preceding claims, characterized in that a boost pressure reduction is effected when the ignition-angle retardation component ($\Delta\alpha$) is greater than or equal to the increment ignition angle ($\Delta\alpha_{inc}$).

9. Method according to one of the preceding claims, characterized in that the boost pressure reduction is performed by forming the difference between a boost pressure setpoint value ($P_{set}$) corresponding to the instantaneous operating condition and an operating-condition-independent normal boost pressure setpoint value ($P_{setnorm}$) corresponding to the ambient pressure and multiplying it by an adaptation factor ($F_{Ad}$).

10. Method according to one of the preceding claims, characterized in that the in each case current adaptation factors ($F_{Ad}$) are stored in an adaptation map as a function of induction temperature ($T_{ind}$) and speed (n) of the internal combustion engine.

11. Method according to one of the preceding claims, characterized in that each adaptation factor ($F_{Ad}$) is assigned an induction temperature range and a speed range.

12. Method according to one of the preceding claims, characterized in that the adaptation map is stored in a write-read memory (RAM).

13. Method according to one of the preceding claims, characterized in that the adaptation factors ($F_{Ad}$) are only stored when if the temperature ($T_{eng}$) of the internal combustion engine is higher than an enabling temperature ($T_{enable}$).

14. Method according to one of the preceding claims, characterized in that, in the case of a restart of the internal combustion engine and a temperature ($T_{eng}$) below the enabling temperature ($T_{enable}$), only one adaptation factor ($F_{Ad}^*$) is active for all operating conditions, which adaptation factor is set after a restart to the neutral starting value "1".

15. Method according to one of the preceding claims, characterized in that the boost pressure setpoint value ($P_{set}$) is dependent on the speed (n) and the throttle-valve opening angle (TV) of the internal combustion engine.

16. Method according to one of the preceding claims, characterized in that, in the case of a restart of the internal combustion engine and a temperature ($T_{eng}$) above the enabling temperature ($T_{enable}$), the stored adaptation factors ($F_{Ad}$) are taken as starting points.

17. Method according to one of the preceding claims, characterized in that the adaptation factor ($F_{Ad}^*$) or adaptation factors ($F_{Ad}$) are increased only when the throttle-valve opening angle (TV) has exceeded a minimum value ($TV_{min}$).

**18.** Method according to one of the preceding claims, characterized in that the minimum value ($TV_{min}$) is dependent on the speed (n) of the internal combustion engine.

**19.** Method according to one of the preceding claims, characterized in that the limiting value ($\alpha_{limit}$) is made up of the sum of the individual angles of the retardation of all cylinders.

**Revendications**

**1.** Procédé de régulation de la détonation d'un moteur à combustion interne équipé d'un turbocompresseur, selon lequel, en présence de l'émission de cliquetis par un cylindre, jusqu'à une valeur limite de l'angle d'allumage, on règle l'angle d'allumage dans le sens du retard au moins pour ce cylindre et, si le cliquetis se poursuit, on abaisse la pression d'alimentation du turbocompresseur du moteur à combustion interne et, lorsque le cliquetis du moteur à combustion interne disparaît, on augmente la pression d'alimentation et on règle l'angle d'allumage dans le sens opposé, caractérisé en ce que la valeur limite de l'angle d'allumage est fixée en fonction de la température des gaz d'échappement du moteur à comoustion interne ($T_{Ab}$) et on augmente la pression d'alimentation (P) dès que, par suite du réglage en retour de l'angle d'allumage ($\alpha$), on atteint de nouveau la valeur limite de l'angle d'allumage ($\alpha_{limite}$) et, selon l'état de fonctionnement respectif du moteur, on enregistre les valeurs de la pression d'alimentation qui s'établissent pour une conduite adaptative du procédé et, lors d'un nouveau démarrage on utilise comme valeurs initiales les mêmes états de fonctionnement.

**2.** Procédé selon la revendication 1, caractérisé en ce que, selon l'état de fonctionnement respectif, on enregistre l'angle d'allumage ($\alpha$) qui s'établit pour une conduite adaptative du procédé, notamment pour chaque cylindre.

**3.** Procédé selon l'une des revendications précédentes, caractérisé en ce que le réglage de l'angle d'allumage vers le retard et le réglage en retour de l'angle d'allumage ($\alpha$) se font par paliers.

**4.** Procédé selon l'une des revendications précédentes, caractérisé en ce que l'abaissement de la pression d'alimentation et le relèvement de la pression d'alimentation se font par paliers.

**5.** Procédé selon l'une des revendications précédentes, caractérisé en ce que le réglage de l'angle d'allumage est à la base d'un angle d'allumage de champ de caractéristiques ($\alpha_{car}$) dépendant de l'état de fonctionnement.

**6.** Procédé selon l'une des revendications précédentes, caractérisé en ce que l'angle d'allumage instantané ($\alpha$) se compose de la somme de la valeur caractéristique de l'angle d'allumage ($\alpha_{car}$) et d'une composante de réglage en retard de l'angle d'allumage ($\Delta\alpha$).

**7.** Procédé selon l'une des revendications précédentes, caractérisé en ce que la valeur limite de l'angle d'allumage ($\alpha_{limite}$) se compose de la valeur caractéristique ($\alpha_{car}$) de l'angle d'allumage selon un champ de caractéristiques, et d'un angle d'allumage complémentaire ($\Delta\alpha_{com}$) dépendant lui-même de la valeur réelle de la pression d'alimentation ($P_{réelle}$) et de la vitesse de rotation (n) du moteur à combustion interne.

**8.** Procédé selon l'une des revendications précédentes, caractérisé en ce qu'on abaisse la pression d'alimentation lorsque la composante de l'angle d'allumage pour le réglage du retard ($\Delta\alpha$) est supérieure ou égale à l'augmentation de l'angle d'allumage ($\Delta\alpha_{com}$).

**9.** Procédé selon l'une des revendications précédentes, caractérisé en ce qu'on abaisse la pression d'alimentation en formant la différence entre une valeur de consigne de la pression d'alimentation ($P_{cons}$) correspondant à l'état de fonctionnement instantané, et une valeur de consigne normale de la pression d'alimentation ($P_{consnorm}$) indépendante de l'état de fonctionnement, correspondant à la pression ambiante, et on multiplie par un coefficient d'adaptation ($F_{Ad}$).

**10.** Procédé selon l'une des revendications précédentes, caractérisé en ce qu'on enregistre les coefficients d'adaptation instantanée respectifs ($F_{Ad}$) en fonction de la température d'aspiration ($T_{Asp}$) et de la vitesse de rotation (n) du moteur à combustion interne dans un champ de caractéristiques d'adaptation.

**11.** Procédé selon l'une des revendications précédentes, caractérisé en ce qu'on associe à chaque coefficient d'adaptation ($F_{Ad}$) une plage de températures d'adaptation et une plage de vitesses de rotation.

**12.** Procédé selon l'une des revendications précédentes, caractérisé en ce qu'on enregistre le champ de caractéristiques d'adaptation dans une mémoire vive (RAM).

13. Procédé selon l'une des revendications précédentes, caractérisé en ce qu'on enregistre en mémoire les coefficients d'adaptation ($F_{Ad}$) seulement lorsque la température ($T_{Mot}$) du moteur à combustion interne est supérieure à la température de libération ($T_{lib}$).

14. Procédé selon l'une des revendications précédentes, caractérisé en ce que pour un nouveau démarrage du moteur à combustion interne et une température du moteur ($T_{Mot}$) inférieure à la température de libération ($T_{lib}$), il n'y a qu'un coefficient d'adaptation ($F_{Ad}^*$) valable pour tous les états de fonctionnement qui, après un nouveau démarrage, est fixé à la valeur neutre ⟨⟨ 1 ⟩⟩.

15. Procédé selon l'une des revendications précédentes, caractérisé en ce que la valeur de consigne de la pression d'alimentation ($P_{cons}$ )- dépend de la vitesse de rotation (n) et de l'angle d'ouverture (DK) du papillon d'étranglement du moteur à combustion interne.

16. Procédé selon l'une des revendications précédentes, caractérisé en ce que pour un nouveau démarrage du moteur à combustion interne et une température ($T_{Mot}$) supérieure à la température de libération ($T_{lib}$) on utilise les coefficients d'adaptation ($F_{Ad}$) enregistrés.

17. Procédé selon l'une des revendications précédentes, caractérisé en ce qu'on augmente le coefficient d'adaptation ($F_{Ad}^*$) ou les coefficients d'adaptation ($F_{Ad}$) seulement lorsque l'angle d'ouverture (DK) du papillon d'étranglement dépasse une valeur minimale ($DK_{min}$).

18. Procédé selon l'une des revendications précédentes, caractérisé en ce que la valeur minimale ($DK_{min}$) dépend de la vitesse de rotation (n) du moteur à combustion interne.

19. Procédé selon l'une des revendications précédentes, caractérisé en ce que la valeur limite ($\alpha_{limite}$) dépend de la somme des différents angles de réglage dans le sens du retard de tous les cylindres.

Fig. 1

Fig. 2

EP 0 467 893 B1

# Fig. 3

| $T_{Ans}$ | | | | | | |
|---|---|---|---|---|---|---|
| $T_{Ans}3$ | $F_{Ad1}$ | $F_{Ad2}$ | $F_{Ad3}$ | $F_{Ad4}$ | $F_{Ad5}$ |
| $T_{Ans}2$ | $F_{Ad6}$ | $F_{Ad7}$ | $F_{Ad8}$ | $F_{Ad9}$ | $F_{Ad10}$ |
| $T_{Ans}1$ | $F_{Ad11}$ | $F_{Ad12}$ | $F_{Ad13}$ | $F_{Ad14}$ | $F_{Ad15}$ |

0    $n_1$    $n_2$    $n_3$    $n_4$    $n_{max.}$    $n \longrightarrow$

$n = const.$
$F_{Ad} = 0,75$

$P_{soll}$

$P_{soll\,norm}$

DK1    DK

# Fig. 4